# FASCICULE DE BREVET EUROPEEN

(11) **EP 3 054 652 B1**
(45) Date de publication et mention de la délivrance du brevet: **10.06.2020**
(21) Numéro de dépôt: 16154389.7
(22) Date de dépôt: 05.02.2016
(51) Int. Cl.: H04L 29/08, H04W 4/06, H04L 12/18, H04L 12/725, H04L 12/761, H04W 40/02, H04W 72/08, H04B 7/185

(54) **AJUSTEMENT DYNAMIQUE DU MODE DE TRANSMISSION DANS UN SYSTEME DE COMMUNICATION SATELLITE**
DYNAMISCHE ANPASSUNG DES ÜBERTRAGUNGSMODUS IN EINEM SATELLITEN-KOMMUNIKATIONSSYSTEM
DYNAMIC ADJUSTMENT OF THE TRANSMISSION MODE IN A SATELLITE COMMUNICATION SYSTEM

(30) Priorité: 06.02.2015 FR 1500230
(43) Date de publication de la demande: 10.08.2016
(73) Titulaire: THALES, 92400 Courbevoie (FR)
(72) Inventeur: CHUBERRE, Nicolas, 31820 Pibrac (FR); ARNAL, Fabrice, 31270 Cugnaux (FR); BLOSSE, Cyrille, 31100 Toulouse (FR); BAUDOUIN, Cédric, 31400 Toulouse (FR); GARNIER, Benoît, 31100 Toulouse (FR)
(74) Mandataire: Priori, Enrico

(56) Documents cités:
- EP-A2- 1 059 763
- EP-A2- 2 480 004
- WO-A1-00/42519
- WO-A1-2004/017561
- US-A1- 2002 136 201
- US-A1- 2005 259 682
- US-A1- 2010 177 642
- US-A1- 2012 324 036
- US-B1- 8 432 808
- CHEN H ET AL: "Wormhole caching with http push method for a satellite-based web content multicast and replication scheme", INTERNET CITATION, mars 1999 (1999-03), pages 1-12, XP002201410, Extrait de l'Internet: URL:http://citeseer.nj.nec.com/chen99wormh ole.html [extrait le 2002-06-06]
- "Satellite Earth Stations and Systems (SES); Broadband Satellite Multimedia; IP interworking over satellite; Multicasting; ETSI TR 102 156", IEEE, LIS, SOPHIA ANTIPOLIS CEDEX, FRANCE, vol. SES-BSM, no. V1.1.1, 1 avril 2003 (2003-04-01), XP014015561, ISSN: 0000-0001

## Description

L'invention se situe dans le domaine des systèmes de communication satellite haut débit, et plus particulièrement de l'optimisation de l'utilisation de la bande passante dans ces systèmes.

Le trafic internet, tiré principalement par la consommation de contenus multimédia de volumes croissant, ainsi que par l'augmentation du nombre de services, croit de manière exponentielle. Ceci a un impact direct sur la bande passante moyenne par utilisateur. Cependant, les liaisons de communications par satellite sont dotées de capacités de transport de trafic IP limitées, qui ne peuvent augmenter pendant la durée de vie du satellite.

Ces limitations des capacités de transport affectent donc directement le nombre de terminaux pouvant être servis simultanément par le système, particulièrement durant les heures les plus chargées de la journée. Plus le besoin moyen de bande passante par terminal est important, moins le système pourra servir de terminaux simultanément.

Dans la suite du document, est désigné par le terme « contenu multimédia » tout contenu audio, vidéo et/ou texte, accessible au public avec ou sans abonnement, en diffusion en flux (streaming en anglais) ou en téléchargement. Cela correspond à des contenus accessible sur des sites Web, Serveurs FTP (acronyme anglais pour File Transfer Protocol, ou protocole de transfert de fichiers), sites de vidéo à la demande ou programmes multimédia en direct.

L'invention se place dans le cadre d'un système de communication haut débit par satellite comprenant au moins une passerelle reliée à un serveur, ou grappe de serveurs, mettant à disposition des contenus multimédias par l'intermédiaire d'un serveur, d'un réseau privé ou du réseau internet public, un lien satellitaire, et un ensemble de terminaux accédant aux données du serveur par le biais du lien satellitaire et de la passerelle.

La diffusion de données par le lien satellitaire selon un mode point à multipoint (vers plusieurs destinataires identifiés, ou l'ensemble des terminaux présents dans un même spot satellitaire) plutôt qu'un mode point à point permet d'éviter de réaliser de multiples transmissions d'un même contenu en parallèle. Ce type de diffusion suppose néanmoins une connaissance a priori de la demande liée au contenu multimédia acheminé. Le choix du mode de l'acheminement d'un contenu multimédia selon un mode de diffusion point à point ou point à multipoint peut donc être réalisé selon que le contenu, comme un programme TV ou radio, est supposé avoir de l'audience. On parle ici de popularité supposée.

Certaines solutions satellitaires, comme par exemple celle décrite dans la demande de brevet Européen EP 2 480 004, proposent de rajouter des espaces mémoire du côté des terminaux permettant de stocker des contenus multimédia afin de les mettre à disposition sans délai aux utilisateurs qui les demandent après la diffusion. Les flux les plus populaires sont alors transmis pour être mis en mémoire pendant des créneaux horaires où la charge sur le réseau est moins importante.

Cependant, ces mécanismes ne sont pas applicables dans le cas où un contenu multimédia est demandé par plusieurs utilisateurs sans que cela n'ait été anticipé. Ils sont soumis à une décision sur la popularité d'un contenu, qui n'évolue pas en fonction des demandes.

Une autre méthode, décrite dans le brevet US 8,432,808 B1, consiste à retarder l'émission du contenu en fonction de différents critères, puis à diffuser le contenu selon un mode de diffusion point à multipoint. Les critères peuvent être liés par exemple au poids du fichier, ou à sa popularité. En retardant au maximum les contenus les plus populaires, le nombre de terminaux ayant requis le contenu multimédia avant son émission augmente. Ce mécanisme permet d'optimiser la ressource satellitaire mais présente l'inconvénient de retarder l'émission du contenu multimédia, augmentant ainsi la latence du système de communication, et diminuant la qualité de service. Il présente également l'inconvénient de ne s'appliquer qu'aux contenus dont l'émission peut être différée, et ne s'applique donc pas aux programmes multimédias diffusés en direct.

L'invention apporte une solution permettant de maximiser le volume de contenu multimédia diffusé vers chacun des terminaux par le lien de communication satellite en minimisant le nombre de retransmissions d'un même contenu tout en réduisant les exigences en ressources du système.

D'une manière générale, l'invention part du principe que plus un contenu est populaire, plus il doit être mémorisé au plus près des utilisateurs.

L'invention n'entraine pas de latences supplémentaires à la transmission, s'appliquant ainsi aux diffusions en direct (en anglais « streaming »), mais aussi aux contenus et services de téléchargement et de navigation web classiques, habituellement véhiculés selon un mode de diffusion point à point. Pour ceci, elle exploite la capacité intrinsèque de diffusion point à multipoint des liaisons satellites, en adaptant le mode de transmission des contenus multimédia en fonction d'une popularité mesurée, et en mettant en mémoire les contenus les plus populaires au plus près du terminal satellite.

L'invention propose d'insérer des routeurs en amont et en aval du lien satellitaire, les routeurs étant chargés de mesurer la popularité d'un contenu multimédia, à juger du mode de transmission le plus adapté pour la transmission satellite, et à le mémoriser le plus près possible des utilisateurs finaux.

La demande de brevet Européen EP 1 059 763 A2, ou la demande international WO 00/42519, décrivent des réseaux satellitaires comprenant des routeurs disposant de mémoire. Ces routeurs sont positionnés en amont et en aval du lien satellitaire. Cependant, les systèmes de transmission décrits dans ces documents ne sont optimaux, en particulier lorsqu'un contenu non mémorisé est requis par des terminaux utilisateurs distincts durant le laps de temps où le routeur en amont réalise la requête du contenu auprès du serveur. Plusieurs requêtes successives vont parvenir au routeur satellite, qui retransmettra autant de fois le même contenu, utilisant alors inutilement la bande passante du système notamment sur la voie retour.

La demande de brevet Américain US 2012/0324036 A1 enseigne l'utilisation de routeurs disposant de mémoire positionnés en amont et en aval du lien satellite, les mémoires des différents routeurs contenant toutes les mêmes données. Lorsqu'un terminal utilisateur requiert un contenu, le routeur en amont se contente de renvoyer un indice permettant au terminal utilisateur de récupérer le contenu auprès du routeur situé en aval du lien satellitaire. Ce fonctionnement permet de réduire la bande passante utilisée, mais sollicite inutilement le lien satellitaire, tout en augmentant la latence de réponse au terminal utilisateur.

L'invention est définie par les revendications indépendantes de système 1 et de procédé 12. L'invention concerne donc un système de transmission d'un flux de données entre un serveur et des terminaux utilisateurs, le système comprenant au moins une passerelle satellite connectée audit serveur par le biais d'un routeur satellite et configurée pour communiquer avec au moins un terminal satellite par un lien satellitaire, chaque terminal utilisateur étant connecté audit terminal satellite par le biais d'un routeur terminal comprenant des ressources de stockage mémoire, le terminal utilisateur étant configuré pour effectuer des requêtes de flux de données auprès dudit serveur. Le système de transmission est tel que:
- le routeur terminal est configuré pour, lorsqu'il reçoit une requête d'un flux de données émis par un terminal utilisateur, rechercher si ledit flux de données est disponible dans ses ressources mémoires, et :
   ∘ lorsque ledit flux de données n'est pas disponible: mémoriser ladite requête et, lorsqu'un message (226) de correspondance entre ledit flux de données et des paramètres de diffusion point à multipoint a été reçu, bloquer la transmission de ladite requête sur le lien satellitaire, sinon la transmettre audit routeur satellite,
   ∘ lorsque ledit flux de données est disponible, le transmettre au terminal utilisateur, et bloquer la transmission de ladite requête,
- le routeur satellite est configuré pour, lorsqu'il reçoit une requête d'un flux de données :
   ∘ transmettre la requête au serveur et recevoir ledit flux de données,
   ∘ estimer une popularité dudit flux de données en fonction des requêtes effectuées et, lorsque ladite popularité est supérieure ou égale à un seuil,
   ∘ transmettre à tous les routeurs terminaux un message indiquant une correspondance entre ledit flux de données et des paramètres de diffusion point à multipoint, et
   ∘ convertir ledit flux de données en un flux de données point à multipoint dont les paramètres de diffusion sont ceux dudit message de correspondance, et comprenant ladite estimation de popularité dudit flux de données, puis le transmettre au routeur terminal ;
- le routeur terminal est en outre configuré pour :
   ∘ recevoir des flux de données point à multipoint,
   ∘ convertir ledit flux de données point à multipoint en un ou plusieurs flux de données point à point transmis aux terminaux utilisateurs les ayant requis, en utilisant lesdits messages de correspondance transmis par le routeur satellite, et
   ∘ selon sa popularité, mémoriser ledit flux de données.

Avantageusement, le routeur terminal est en outre configuré pour maintenir une base de données de correspondance entre des flux de données, des paramètres de diffusion de flux de données point à multipoint, et des requêtes de flux de données.

Avantageusement, ledit routeur terminal est en outre configuré pour transmettre audit routeur satellite une mesure d'une consommation des flux de données disponibles dans ses ressources mémoires.

Selon un autre mode de réalisation du système de transmission d'un flux de données selon l'invention, ledit routeur terminal est configuré pour établir un profil de consommation des flux de données requis par chacun des terminaux utilisateurs auxquels il est connecté, et mémoriser ledit flux de données point à multipoint reçu selon sa popularité et ledit profil de consommation.

Avantageusement, ledit routeur satellite est en outre configuré pour sélectionner lesdits flux de données à convertir en flux de données point à multipoint en fonction de leur contenu.

Avantageusement, ledit routeur terminal est configuré pour mémoriser les flux de données reçus en fonction de leur popularité, de la popularité des flux en mémoire, et de l'espace mémoire disponible.

Avantageusement, ledit routeur satellite est configuré pour mémoriser ledit flux de données selon sa popularité.

Selon un autre mode de réalisation, le système de transmission d'un flux de données selon l'invention comprend en outre un lien terrestre entre ladite passerelle satellite et ledit terminal satellite, dans lequel ledit routeur satellite est configuré pour transmettre les flux de données dont la popularité est inférieure audit seuil par ledit lien terrestre.

Avantageusement, dans le système de transmission d'un flux de données selon l'invention, le message (226) indiquant une correspondance entre ledit flux de données et des paramètres de diffusion point à multipoint comprend une adresse IP multicast.

Avantageusement, ledit routeur terminal est configuré pour, lorsqu'il reçoit une pluralité de requêtes d'un même flux de données depuis les terminaux utilisateurs, transmettre une unique requête dudit flux de données au serveur.

Avantageusement, dans le système de transmission d'un flux de données selon l'invention, ledit routeur satellite est configuré pour transmettre les flux de données les plus populaires lorsque la charge d'utilisation du réseau satellitaire est inférieure à un seuil.

L'invention concerne également un procédé de transmission d'un flux de données entre un serveur et des terminaux utlisateurs dans un système de transmission comprenant au moins une passerelle satellite connectée audit serveur par le biais d'un routeur satellite, et configurée pour communiquer avec au moins un terminal satellite par un lien satellitaire, chaque terminal utilisateur étant connecté audit terminal satellite par le biais d'un routeur terminal comprenant des ressources de stockage mémoire, le terminal utilisateur étant configuré pour effectuer des requêtes de flux de données auprès dudit serveur. Le procédé est tel qu'il comprend les étapes de :
- Recherche, par le routeur terminal lors de l'envoi d'une requête d'un flux de données par ledit terminal utilisateur, dudit flux de données dans les ressources de stockage mémoire et :
   ∘ lorsque ledit flux de données n'est pas disponible: mémorisation de ladite requête et, lorsqu'un message (226) de correspondance entre ledit flux de données et des paramètres de diffusion point à multipoint a été reçu, blocage de la transmission de ladite requête sur le lien satellitaire, et sinon transmission de ladite requête audit routeur satellite, et mise en œuvre des étapes suivantes du procédé, ou
   ∘ lorsque ledit flux de données est disponible, transmission dudit flux de données au terminal utilisateur, et blocage de la transmission de ladite requête d'un flux de données au serveur,
- Transmission, par ledit routeur satellite vers ledit serveur, de ladite requête d'un flux de données,
- Transmission, par ledit serveur vers ledit routeur satellite, desdites données sous la forme d'un flux de données point à point,
- Estimation, par ledit routeur satellite, de la popularité dudit flux de données requis,
- Lorsque ladite estimation de popularité est supérieure ou égale audit seuil :
   ∘ Transmission à l'ensemble des routeurs terminaux d'un message indiquant une correspondance entre ledit flux de données et des paramètres de diffusion point à multipoint,
   ∘ Conversion, par ledit terminal satellite, dudit flux de données point à point en un flux de données point à multipoint dont les paramètres de diffusion sont ceux dudit message de correspondance,
   ∘ Transmission, par ledit terminal satellite, dudit flux de données point à multipoint associé à ladite estimation de popularité audit routeur terminal,
   ∘ Réception, par ledit routeur terminal, des flux point à multipoint transmis par le routeur satellite, conversion desdits flux en flux de données point à point transmis aux terminaux utilisateurs les ayant requis en utilisant ledit message de correspondance transmis par le routeur satellite, et
   ∘ Mise en mémoire, par ledit routeur terminal, dudit flux de données, selon l'estimation de popularité.

Dans un mode de réalisation, le procédé de transmission d'un flux de données selon l'invention, comprend en outre, lorsque l'estimation de popularité réalisée par le routeur satellite est inférieur à un seuil, les étapes de :
- Transmission, par ledit routeur satellite, dudit flux de données point à point au routeur terminal, et
- Transmission, par ledit routeur terminal, du flux de données point à point audit terminal utilisateur ayant initié la requête du flux de données.

Avantageusement, le procédé de transmission d'un flux de données selon l'invention, comprend en outre une étape de transmission, par ledit routeur terminal et à destination dudit routeur satellite, d'une mesure de la consommation des flux de données mémorisés par le routeur terminal, et une étape de mise à jour ladite estimation de popularité réalisée par ledit routeur satellite prenant en compte ladite mesure de la consommation des flux de données.

L'invention sera mieux comprise et d'autres caractéristiques et avantages apparaîtront mieux à la lecture de la description qui suit, donnée à titre non limitatif, et grâce aux figures annexées parmi lesquelles :
- La figure 1 présente un mode de réalisation d'une architecture d'un système de communication satellitaire selon l'invention,
- La figure 2 présente un diagramme de séquencement des étapes du procédé de communication satellitaire selon l'invention,
- La figure 3 présente un deuxième mode de réalisation d'une architecture d'un système de communication satellitaire selon l'invention.

Le trafic internet, tiré principalement par la consommation de contenus multimédia, suit une croissance exponentielle.

La consommation moyenne de contenus multimédia est en augmentation, avec une moyenne actuelle de plus de 6 heures par jour par individus aux Etats-Unis.

Cette croissance est liée à:
- l'augmentation de la consommation de contenus multimédia correspondant à des vidéos provenant d'un site Internet, ou à des chaines de télévision en continu, et
- au passage à la haute définition ou à la multi vision, qui conduit à augmenter la bande passante utilisée par les contenus.

Tout ceci contribue à saturer les réseaux d'accès par satellite.

Il est cependant possible d'optimiser le dimensionnement des réseaux d'accès haut débit par satellite, en tirant parti de ce qu'une minorité des contenus sont consommés par une majorité des utilisateurs, selon le principe de Pareto. Cette hypothèse est confirmée par l'observation de la loi de répartition des audiences des sites et des contenus les plus populaires.

L'idée de l'invention est de diffuser en mode point à multipoint les contenus multimédia les plus populaire vers des points de stockage localisés dans les terminaux du réseau d'accès satellite, afin de délester les ressources du réseau en particulier lors des heures de pointe du trafic.

Le problème réside dans la définition d'un mécanisme permettant :
- d'identifier les contenus multimédia à forte audience éligibles pour une transmission sur les ressources de diffusion vers les points de stockage, et
- de libérer les points de stockage de contenus dont la popularité est devenue insuffisante.

Dans la suite du document, on parlera de liaison point à point pour une liaison à destination d'un interlocuteur unique, identifié généralement par son adresse IP, dite adresse IP Unicast.

On parlera de liaison point à multipoint dans le cadre d'une liaison vers de multiples utilisateurs, voire vers l'ensemble des équipements d'un même spot satellitaire. Généralement, les destinataires d'une liaison point à multipoint font partie d'un groupe identifié par le biais d'une adresse IP spécifique, dite adresse IP multicast.

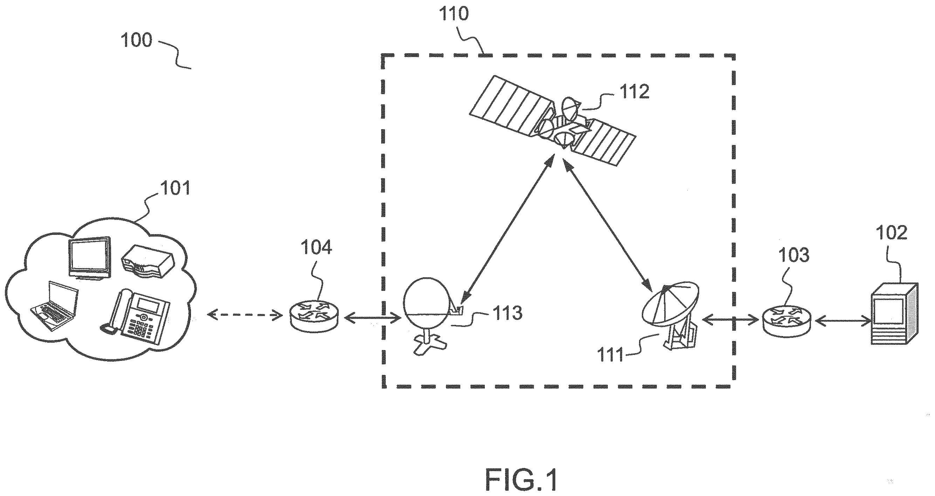

La figure 1 présente l'architecture d'un système de communication satellitaire 100 mettant en œuvre l'invention. Généralement, ce type de système opère dans les bandes de fréquence Ka ou Ku sur le lien de service.

Le système est constitué d'un ensemble de terminaux utilisateurs 101, d'un segment spatial 110 comprenant une passerelle satellite 111, un satellite 112 et un terminal satellite 113. La passerelle satellite est reliée à un serveur 102 permettant d'accéder à des contenus multimédia.

Le segment spatial est capable de générer un ou plusieurs spots adjacents. Les passerelles et terminaux satellite émettent et reçoivent des porteuses dans un ou plusieurs spots et établissent des connexions entre les terminaux et le serveur. Le système peut alors comprendre plusieurs terminaux satellites 113, chacun de ces terminaux étant relié à un ensemble de terminaux utilisateurs 101 différents. Dans la suite, seul un de ces terminaux satellites est représenté, mais l'invention s'applique de manière équivalente en présence de plusieurs de ces terminaux.

Le système de communication représenté dans la Figure 1 peut par exemple mettre en œuvre une liaison de données DVB-S (standard de communication satellite dont l'acronyme anglais signifie Digital Video Broadcasting - Satellite) ou DVB-S2 (acronyme pour DVB-S - Deuxième génération) avec une voie de retour DVB-RCS (acronyme anglais pour DVB - Return Channel via Satellite) ou DVB-RCS2 (acronyme pour DVB-RCS - Deuxième génération).

L'invention consiste à insérer des routeurs intelligents, c'est-à-dire comportant des moyens de calcul permettant d'exécuter des instructions et comportant ou pouvant accéder à des ressources de stockage mémoire, les routeurs étant sur le chemin des données entre le terminal utilisateur et le serveur, en entrée et en sortie du lien satellite. Un premier routeur 103, nommé par la suite routeur satellite, est associé à la passerelle satellite. Un second routeur 104, nommé par la suite routeur terminal, est associé à chacun des terminaux satellite.

Les routeurs sont des équipements intermédiaires permettant de faire transiter des paquets de données depuis un réseau vers un autre. Ils peuvent être simplement constitués de deux cartes réseaux associées à un logiciel adapté, le logiciel mettant également en œuvre le procédé décrit ici. Un ordinateur, ou n'importe quelle machine de calcul configurée pour exécuter le procédé selon l'invention, peut jouer le rôle de routeur.

Le routeur satellite 103 a pour rôle la mesure d'un indice de popularité des contenus multimédia requis. Cet indice de popularité pourra dépendre, par exemple, du nombre de requêtes utilisateurs, en réalisant une moyenne glissante au cours d'une période de durée déterminée, ou de la taille du contenu. Un contenu multimédia est considéré comme populaire quand son indice franchit un seuil qui dépend de son classement relatif dans la liste des contenus multimédia les plus populaires.

Le calcul de l'indice de popularité peut également prendre en compte d'autres critères, comme l'identification manuelle d'un ensemble de sources de popularité « a priori » déclarées par configuration manuelle dans les passerelles. Cela correspond par exemple à une liste de sites web (ex : YouTube, Netflix, ...), de domaines réseau (ex : www.microsoft.com, ...) ou d'autres formats (ex : adresses IP des serveurs, ...).

D'autres critères peuvent être pris en compte, comme l'ancienneté du contenu, le type de contenu, ou d'autres critères qui sont mis en place dans les réseaux de CDN (acronyme anglais pour Content Delivery Network) traditionnels, comme par exemple la taille des objets. Un contenu très âgé est généralement moins populaire qu'un contenu récent. Le type de contenu est également prépondérant, selon qu'il s'agisse par exemple de séries TV, films, ou de ressources liées à l'actualité, la météo, ou des évènements sportifs par exemple.

Egalement des restrictions géographiques peuvent se poser quant à la diffusion de certains contenus dans certains pays. Les opérateurs peuvent prendre en compte ces restrictions en forçant un indice de popularité comme devant rester nuls pour certains spots ou certaines passerelles satellite couvrant des pays et contenus soumis à restrictions.

Enfin, si l'opérateur qui utilise les services réseau de communications satellite a établi des accords de partenariat avec un autre opérateur de réseau ou de service, ce dernier peut aussi lui fournir périodiquement des indices de popularité, ainsi que certains contenus spécifiques à privilégier (notamment, si l'opérateur satellite offres aussi ses propres services et contenus, le procédé peut permettre d'approvisionner les terminaux utilisateurs).

Les passerelles satellite pouvant gérer des zones géographiques différentes s'informent mutuellement sur les indices de popularité des contenus multimédia.

La valeur du seuil de popularité à utiliser pour déterminer le mode de diffusion du contenu est paramétrable. Sans être critique, elle va influer sur la performance globale du système de communication :
- une valeur de seuil trop élevée va limiter le nombre de contenus pour lesquels sera mis en œuvre le procédé d'optimisation du mode de diffusion des contenus selon l'invention,
- une valeur de seuil trop basse va créer inutilement de l'activité en appliquant le procédé pour des contenus dont la demande est faible.

Lors de la diffusion de contenus audiovisuels en direct, l'invention permet de ne démarrer la diffusion que lorsque la popularité n'est pas nulle, et donc de ne pas solliciter inutilement la ressource satellitaire.

Le routeur satellite 103 a également pour rôle, lorsque le contenu demandé dépasse un certain niveau de popularité, la conversion du flux de données point à point en un flux de données point à multipoint.

Le routeur terminal 104 dispose de ressources de stockage. Ces ressources peuvent être intégrées au routeur, ou être des ressources externes auxquelles le routeur a accès, comme par exemple un disque dur attaché au routeur, ou au réseau du terminal satellite.

Ce routeur terminal a pour rôle la conversion en flux point à point des flux point à multipoint reçus depuis le lien satellitaire. Il met également en mémoire cache les contenus multimédias reçus les plus populaires, afin de les rendre disponible ultérieurement aux terminaux utilisateurs sans solliciter le lien satellitaire.

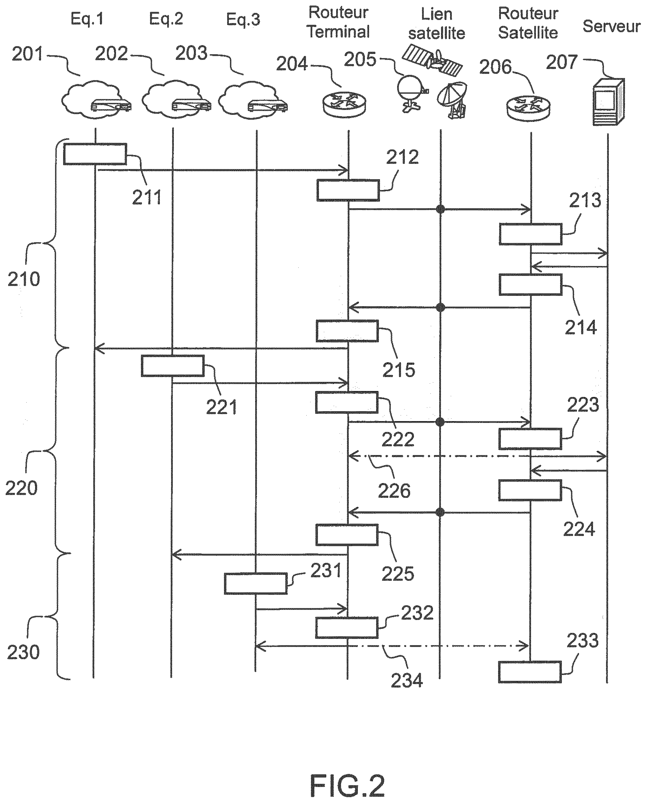

La figure 2 présente un diagramme de séquencement des étapes du procédé de communication satellitaire selon l'invention.

Un premier équipement 201 souhaite accéder des données, comme par exemple un contenu multimédia. L'ensemble des étapes mises en œuvre lorsque la popularité du contenu est inférieure à un seuil sont représentées sous la référence 210. Le premier équipement émet 211 la requête d'un flux de données relatif à un contenu multimédia vers le serveur 207. Ce serveur, lorsqu'il est administré par l'opérateur de service satellite, peut disposer d'une copie locale des contenus jugés les plus populaires qu'il a pu précédemment stocker. Il peut également être un point d'accès vers le réseau mettant à disposition le contenu demandé. La requête transite à travers le lien satellitaire 205. Un routeur intelligent, nommé routeur satellite 206, est positionné en amont de ce lien satellitaire, un deuxième routeur intelligent, nommé routeur terminal est positionné en aval de ce lien satellitaire.

La requête émise par le premier équipement transite par le routeur terminal. Ce dernier réalise alors l'étape 212 de :
- analyse de la requête afin de vérifier si le contenu multimédia requis est présent dans les ressources de stockage mémoire,
- mémorisation de l'identifiant du terminal utilisateur à l'origine de la requête, et
- le contenu requis n'étant pas présent dans les ressources mémoire, transmission de la requête au serveur 207, par le biais du lien satellitaire 205.

Le routeur satellite se trouve sur le chemin de données de la requête. Il réalise alors l'étape 213 de :
- analyse de la requête afin de mettre à jour une mesure de la popularité du contenu,
- comparaison de cette popularité avec un seuil, et, la mesure de popularité étant inférieure au seuil,
- transmission de la requête au serveur.

Le serveur répond à la requête en renvoyant un flux de données point à point comprenant le contenu multimédia requis. Ce flux de données est à destination du terminal utilisateur ayant réalisé la requête initiale. Le routeur satellite se trouve sur le chemin des données. Il réalise alors une étape 214 de transmission du flux de données au routeur terminal, sans le modifier.

Le routeur terminal, lors de l'étape 215, récupère le flux de données point à point, et le transmet à l'équipement à l'origine de la requête.

Les étapes mises en œuvre sous la référence 220 illustrent le comportement du système lorsque les données dépassent un seuil de popularité.

Ainsi, un deuxième équipement 202 émet 221 la requête d'un flux de données, identique au flux de données requis lors de l'étape 201.

Le routeur terminal réalise alors l'étape 222, identique à l'étape 212, et transmet la requête vers le routeur satellite.

Ce dernier réalise alors les étapes 223 de :
- analyse de la requête afin de mettre à jour la mesure de la popularité du contenu,
- comparaison de la popularité avec un seuil, et, la mesure de popularité étant égale ou supérieure au seuil, transmission au routeur terminal d'un message de signalisation 226 permettant d'associer un contenu à une adresse IP multicast, puis
- transmission de la requête au serveur.

Le serveur répond à la requête en renvoyant un flux de données point à point comprenant le contenu multimédia requis. Ce flux de données est à destination du terminal utilisateur ayant réalisé la requête initiale. Le routeur satellite se trouve sur le chemin des données. Il réalise alors une étape 224 de :
- conversion du flux de données point à point en flux de données point à multipoint,
- transmission du flux de données point à multipoint au routeur terminal, associé à la mesure de popularité.

Le routeur terminal va, lors de l'étape 225 :
- récupérer le flux de données point à multipoint, le convertir en multiples flux de données point à point, les transmettre aux terminaux utilisateurs ayant requis le contenu, et
- comparer la mesure de popularité transmise avec les mesures de popularité des autres flux stockés en mémoire et l'espace disponible, afin de mémoriser ou non le flux de données.

La conversion du flux de données point à point en flux de données point à multipoint peut se faire en modifiant les datagrammes IP transportés, c'est-à-dire en remplaçant l'adresse de destination du flux de données par l'adresse de destination multicast transmise par le message 226 au routeur terminal.

Le transport des données sous le format IP Multicast peut se faire par utilisation de méthodes d'encapsulation standard, tels que GSE (acronyme anglais pour Generic Stream Encapsulation), ULE (acronyme anglais pour Unidirectional Lightweight Encapsulation) ou MPE (acronyme anglais pour Multiprotocol Encapsulation).

Par défaut, les terminaux satellite du système ne filtrent aucun flux IP Multicast, ces datagrammes étant transmis directement au routeur terminal local.

Les routeurs satellites doivent maintenir une base de données comprenant, pour chacun des contenus populaires identifiés par exemple par leur URL (acronyme anglais pour Uniform Resource Locator, ou localisateur uniforme de ressources) ou une combinaison de paramètres pouvant inclure l'adresse du serveur d'origine et les numéros de port, l'adresse IP Multicast utilisée pour la transmission.

Les routeurs terminaux doivent maintenir une base de données comprenant, pour chacun des contenus, la liste des identifiants, ou adresses IP, des utilisateurs ayant émis une requête pour accéder à ce contenu.

Lorsque le routeur satellite prend la décision de diffuser un contenu selon un mode de diffusion point à multipoint, il en informe l'ensemble des routeurs terminaux par le biais d'un message de signalisation 226 point à multipoint comportant l'identification du contenu, et les paramètres de diffusion qui seront utilisés pour la diffusion de cet objet, comme par exemple l'adresse IP Multicast.

Lorsqu'un routeur terminal reçoit un flux IP Multicast, il peut ainsi identifier instantanément la ou les adresse IP Unicast des terminaux utilisateurs ayant émis la requête, en consultant sa liste de mise en correspondance entre les identifiants et les contenus. Il pourra alors générer les flux IP Unicast à destination de chacun des abonnés. Pour ceci, une duplication des datagrammes est nécessaire.

Le message de signalisation 226 permet également d'informer l'ensemble des routeurs terminaux du système de communication qu'une requête concernant un contenu identifié est en cours, et que l'information sera bientôt disponible dans la mémoire associée au routeur terminal. Ceci est utile de manière à ne pas transmettre d'autres requêtes vers le même contenu par d'autres terminaux satellite lors de l'intervalle de temps nécessaire au serveur pour avoir à disposition les données requises. Les éléments du message de signalisation comprennent donc l'adresse de l'équipement ayant requis le contenu, la description du contenu (par exemple l'URL demandé) et l'adresse multicast utilisée pour la diffusion point à multipoint, éventuellement associée au numéro de port sur lequel le flux est diffusé.

Ainsi, lors des étapes 212 ou 222 d'analyse de la requête reçue par le routeur terminal depuis un terminal utilisateur, le routeur terminal tient également compte de la réception, ou non, d'un tel message 226 de correspondance entre un contenu et des paramètres de diffusion point à multipoint pour le contenu demandé. Si ce message a été reçu, le routeur terminal est alors informé que le contenu a déjà été requis par un terminal utilisateur raccordé à un autre routeur terminal, qu'il est en cours de requête auprès du serveur 207, et qu'il sera prochainement transmis au routeur terminal. La transmission de la requête au terminal satellite est alors bloquée.

La diffusion du message 226 permet alors de limiter la charge :
- sur la voie retour des terminaux satellite, en bloquant les requêtes de flux dont l'acheminement est en cours, mais également,
- sur la voie aller vers les terminaux satellite, en évitant la rediffusion indue de flux requis par plusieurs terminaux utilisateurs dans l'intervalle de temps nécessaire au routeur satellite pour requérir le flux auprès du serveur, le recevoir, le convertir en flux point à multipoints, et le transmettre aux routeurs terminaux du système de communication.
Le message (226) peut être diffusé par le routeur satellite immédiatement, dans un créneau temporel périodique (ex : toutes les N trames) prévu ou encore dès que des ressources radio sont disponibles dans le système de communication.

Le routeur terminal va également comparer la mesure de popularité transmise avec les mesures de popularité des autres flux stockés dans sa mémoire, ainsi que l'espace disponible, afin de décider de mémoriser ou non le flux de données.

Les étapes mises en œuvre sous la référence 230 illustrent le comportement du système lorsque les données requises sont mémorisées dans le routeur terminal.

Un troisième équipement 203 émet 231 la requête vers un flux de données. Ce flux de données étant présent dans les ressources de stockage mémoire du routeur terminal, celui-ci va, lors de l'étape 232 :
- transmettre ledit flux de données au troisième équipement,
- transmettre au routeur satellite un message 234 indiquant qu'un contenu mémorisé a été requis par un terminal utilisateur, et
- ne pas propager la requête de contenu vers le serveur, le contenu requis ayant été mis à disposition du troisième équipement.

Le routeur satellite prend en compte 233 le message 234 pour mettre à jour la mesure de la popularité du contenu.

Avantageusement, le message indiquant qu'un contenu mémorisé a été requis peut être transmis au routeur satellite lorsqu'un même contenu en mémoire a été requis une pluralité de fois. Le message peut également être transmis de manière périodique, éventuellement en regroupant les mesures associées à plusieurs contenus.

Le routeur satellite va prendre en compte ce message pour mettre à jour 233 la mesure de popularité estimée du flux de données.

L'architecture du système de communication satellite décrit ici permet, lorsqu'un utilisateur requiert un contenu multimédia non disponible dans les ressources mémoires associées au routeur terminal, de diffuser (ou rediffuser) le contenu par la liaison satellite, associé à son indice de popularité mis à jour. Cette diffusion se fait en mode point à multipoint. Ainsi, l'ensemble des terminaux satellite du spot satellitaire reçoivent le flux de données. Ce fonctionnement diffère du fonctionnement normal des systèmes de transmission satellite, dans lesquelles les données point à point sont généralement filtrées au niveau MAC (terme anglais pour Médium Access Layer, ou couche liaison de données).

Avantageusement, lors des étapes 212 et 213, lorsque le routeur satellite ou le routeur terminal reçoivent simultanément plusieurs demandes d'un même contenu, ils ne transmettent respectivement au routeur satellite et au serveur qu'une seule requête, optimisant ainsi la consommation de bande passante sur la liaison retour du système satellite. Au niveau du routeur terminal, cette opération se fait en ajoutant les identifiants des utilisateurs ayant requis le contenu à la liste de correspondance entre les identifiants des utilisateurs et les contenus demandés.

Avantageusement, lors de l'étape 213 ou 214, le routeur satellite peut réaliser une première phase de sélection des contenus multimédia appropriés pour la diffusion en mode point à multipoint. Cette sélection peut se faire par reconnaissance des en-têtes de signalisation, par identification des tailles de paquets IP, ou par toute autre technique mise en œuvre, comme par exemple les techniques de « Deep Packet Inspection » (terme anglais pour Inspection des Paquets en Profondeur). En effet, il n'est pas approprié de diffuser en mode point à multipoint des données comme les échanges de messagerie, le trafic téléphonique ou les audio/vidéos conférences privées.

Avantageusement, le routeur satellite peut comprendre des ressources de stockage mémoire, lui permettant de mémoriser les contenus les plus populaires. De cette manière, lorsque le contenu demandé est mémorisé, les étapes 213 et 214 sont réalisées simultanément par le routeur satellite, qui ne transmet pas la requête de contenu au serveur 207. La latence d'accès aux contenus à diffuser est alors réduite, améliorant ainsi la qualité de service.

Avantageusement, le routeur terminal établi un profil des requêtes de contenu des utilisateurs qu'il sert. Un profil de consommation est caractérisé par un type de contenu (par exemple vidéo, web, images, ...), un genre (par exemple sport, politique, ...), une langue, ou tout autre critère permettant de caractériser le contenu. Ce profil de consommation des différents utilisateurs reliés à un terminal satellite est utilisé conjointement à la mesure de popularité afin de déterminer les contenus plus à même d'être mémorisés. Par exemple, si le profil de consommation montre qu'aucun des équipements ne consomme de contenus vidéo en langue allemande, un tel contenu ayant une popularité élevée ne sera pas mis en mémoire. Le choix de mémoriser ou non un flux de données se fait alors en considérant la popularité du contenu, pondérée par une note d'adéquation au profil de consommation du routeur terminal.

L'invention peut être mise en œuvre au niveau d'un unique spot satellitaire, tel que décrit précédemment, mais également au niveau d'une zone géographique délimitée, par exemple, par l'empreinte au sol de l'un ou de plusieurs spots géographiques, ou à l'ensemble du réseau.

Dans ces derniers cas, la mesure de la popularité des différents flux devra être réalisée à l'échelle de la zone considérée, de même que la transmission du message de signalisation (226), et la transmission du flux de données point à multipoint (224).

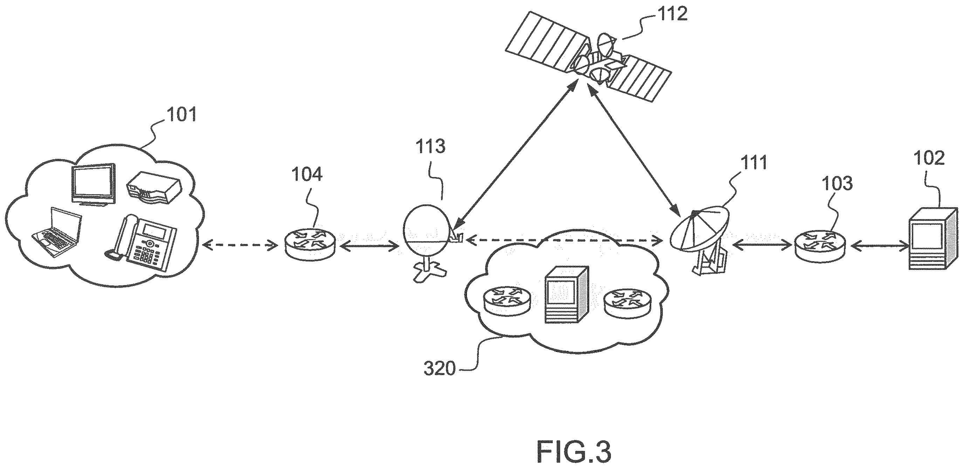

La figure 3 présente un deuxième mode de réalisation d'une architecture d'un système de communication satellitaire selon l'invention, dans lequel le réseau de communication satellite est utilisé conjointement à un réseau de communication terrestre 320, comme par exemple un réseau ADSL (terme anglais pour Asymmetric Digital Subscriber Line) ou un réseau cellulaire.

Ce mode de réalisation s'adresse essentiellement à l'acheminement de contenus OTT (terme anglais pour Over The Top), c'est-à-dire les contenus pour lesquels le fournisseur de contenu est sur le réseau internet, et ne maitrise pas le réseau le reliant à l'utilisateur. C'est le cas par classique de la diffusion de contenus internet, par opposition aux services pour lesquels le fournisseur de service propose le contenu (par exemple, la VOD, terme anglais pour Video On Demand, ou diffusion à la demande), même si ce mode de réalisation pourrait également s'appliquer à ces contenus.

Ce mode de réalisation ajoute à l'infrastructure du réseau de communication satellite décrit dans la Figure 1, un système de délestage dynamique du lien satellitaire. Ce système de délestage peut par exemple être un système de communication terrestre haut débit. Le même mode de réalisation s'applique pour un système satellitaire utilisé en délestage d'un système de communication terrestre haut débit.

Le routeur satellite 111 réalise alors le routage des flux de données, c'est-à-dire qu'il prend la décision de les acheminer en utilisant l'infrastructure terrestre de l'opérateur, ou la liaison satellite. Ce choix est réalisé à partir de l'application de la fonction d'estimation de la popularité du contenu. Les contenus les plus populaires sont distribués par l'interface de diffusion satellite, approprié pour la transmission de communications point à multipoint, tandis que les autres contenus sont transmis par la voie terrestre, plus approprié pour la transmission de communications point à point.

Dans ce mode de réalisation, la valeur du seuil détermine la répartition du routage entre le réseau terrestre et le réseau satellite.

Cette valeur peut être paramétrable, de manière à évoluer en fonction de la charge et/ou du coût de chacun de ces réseaux.

Avantageusement, dans ce mode de réalisation, le routeur terminal peut être configuré pour transmettre l'ensemble des requêtes de flux par le biais du système de communication satellitaire.

Lorsque la mise en mémoire des flux ne présente pas d'avantage, comme par exemple dans le cadre de la diffusion de contenus audiovisuels en direct, ou lorsque le routeur terminal ne dispose pas de ressources de stockage mémoire, le procédé selon l'invention peut être ajusté, en supprimant les étapes concernant la mise en mémoire des flux de données dans les ressources de stockage associées au routeur terminal ou au routeur satellite. De cette manière, il permet de pouvoir exploiter les ressources de multi diffusion de la liaison satellite en fonction d'une mesure de popularité réelle et non supposée.

Ce mode de réalisation peut permettre de limiter l'investissement et le coût opérationnel lié à la mise en œuvre de ressources de stockage mémoire sur les routeurs.

Le procédé permet alors de sélectionner le mode de transmission d'un contenu en fonction de la popularité estimée des contenus multimédias. La mise à disposition des contenus directement par le routeur terminal n'est pas possible, mais ce procédé est néanmoins avantageux.

Les avantages de la solution proposée dans l'invention sont donc multiples :
- Le nombre de retransmission d'un contenu multimédia populaire, vers les terminaux d'un système de communications satellite, est minimisé, optimisant ainsi la charge du réseau. Cette diminution de charge à un impact direct sur le dimensionnement du réseau satellite;
- Le système de mise en mémoire des contenus selon leur popularité permet de diminuer les latences d'accès aux contenus multimédia les plus populaires, augmentant ainsi la qualité de service et d'expérience pour l'utilisateur ;
- Le système utilise de manière optimale la bande passante, la communication des contenus se faisant lors d'une requête utilisateur, et n'ayant pas à être anticipée lors des baisses de charges du réseau d'accès satellite ;
- La mesure de popularité utilisée pour le choix du mode de diffusion d'un contenu, est une popularité réelle et non supposée, qui évolue au cours du temps ;
- Le système s'applique à la diffusion d'événements en direct, et n'ajoute pas de délai à la transmission ;
- Le système gère de manière dynamique et optimale l'espace mémoire associé au routeur terminal.
- La solution est transparente vis-à-vis du trafic internet, des protocoles CDN et des systèmes de mise en mémoire cache de bout en bout ;
- La solution pourrait être compatible de contenus sécurisés moyennant une délégation de sécurité accordée par les fournisseurs de contenus à l'opérateur satellite ;
- La solution est généralisable à un système de communication ayant plusieurs passerelles satellites, dans lequel les routeurs satellites, par l'intermédiaire d'un réseau terrestre, peuvent s'échanger les indices de popularité de contenu, et peuvent répartir et/ou dupliquer les contenus populaires en mémoire ;
- La solution peut s'appliquer à un accès hybride combinant un réseau d'accès satellite et un réseau d'accès terrestre, optimisant ainsi la charge du réseau satellite et/ou du réseau terrestre ;
- La solution peut s'appliquer à un réseau d'accès satellite ayant de multiples passerelles réparties dans des sites/pays différents ;
- La solution peut être étendue au cas où le serveur 102 est un point de présence (décrit par l'acronyme anglais PoP pour Point Of Presence) d'un réseau CDN.

## Revendications

1. Système de communications satellitaires pour la transmission d'un flux de données, le système de communications satellitaires comprenant un serveur (102), une pluralité de terminaux utilisateurs (101), au moins une passerelle satellite (111) connectée audit serveur par le biais d'un routeur satellite (103) et configurée pour communiquer avec au moins un terminal satellite (113) par un lien satellitaire, chaque terminal utilisateur étant connecté audit terminal satellite par le biais d'un routeur terminal (104) comprenant des ressources de stockage mémoire, et étant configuré pour effectuer des requêtes de flux de données auprès dudit serveur, le système de communications satellitaire tel que :
• le routeur terminal (104) est configuré pour, lorsqu'il reçoit une requête d'un flux de données émis par un terminal utilisateur, rechercher (212, 222, 232) si ledit flux de données est disponible dans ses ressources mémoires, et :
∘ lorsque ledit flux de données n'est pas disponible : mémoriser ladite requête et, lorsqu'un message (226) de correspondance entre ledit flux de données et des paramètres de diffusion point à multipoint a été reçu, bloquer la transmission de ladite requête sur le lien satellitaire, sinon la transmettre audit routeur satellite,
∘ lorsque ledit flux de données est disponible, le transmettre au terminal utilisateur, et bloquer la transmission de ladite requête ;
• le routeur satellite (103) est configuré pour, lorsqu'il reçoit une requête d'un flux de données :
∘ transmettre la requête au serveur et recevoir ledit flux de données,
∘ estimer une popularité (213, 223) dudit flux de données en fonction des requêtes effectuées et, lorsque ladite popularité est supérieure ou égale à un seuil :
• transmettre à tous les routeurs terminaux un message (226) indiquant une correspondance entre ledit flux de données et des paramètres de diffusion point à multipoint, et
• convertir ledit flux de données en un flux de données point à multipoint dont les paramètres de diffusion sont ceux dudit message de correspondance, et comprenant ladite estimation de popularité dudit flux de données, puis le transmettre au routeur terminal ;
• le routeur terminal (104) est en outre configuré pour :
∘ recevoir des flux de données point à multipoint,
∘ convertir les flux de données point à multipoint reçus en flux de données point à point transmis aux terminaux utilisateurs les ayant requis, en utilisant lesdits messages de correspondance transmis par le routeur satellite, et
∘ selon sa popularité, mémoriser ledit flux de données.

2. Système de communications satellitaires selon la revendication précédente, dans lequel le routeur terminal (104) est en outre configuré pour maintenir une base de données de correspondance entre des flux de données, des paramètres de diffusion de flux de données point à multipoint, et des requêtes de flux de données.

3. Système de communications satellitaires selon l'une des revendications précédentes, dans lequel ledit routeur terminal (104) est en outre configuré pour transmettre (234) audit routeur satellite (103) une mesure d'une consommation des flux de données disponibles dans ses ressources mémoires.

4. Système de communications satellitaires selon l'une des revendications précédentes, dans lequel ledit routeur terminal (104) est configuré pour établir un profil de consommation des flux de données requis par chacun des terminaux utilisateurs auxquels il est connecté, et mémoriser ledit flux de données point à multipoint reçu selon sa popularité et ledit profil de consommation.

5. Système de communications satellitaires selon l'une des revendications précédentes, dans lequel ledit routeur satellite (103) est en outre configuré pour sélectionner lesdits flux de données à convertir en flux de données point à multipoint en fonction de leur contenu.

6. Système de communications satellitaires selon l'une des revendications précédentes, dans lequel ledit routeur terminal (104) est configuré pour mémoriser les flux de données reçus en fonction de leur popularité, de la popularité des flux en mémoire, et de l'espace mémoire disponible.

7. Système de communications satellitaires selon l'une des revendications précédentes, dans lequel ledit routeur satellite (103) est configuré pour mémoriser ledit flux de données selon sa popularité.

8. Système de communications satellitaires selon l'une des revendications précédentes, comprenant en outre un lien terrestre (320) entre ladite passerelle satellite et ledit terminal satellite, dans lequel ledit routeur satellite (103) est configuré pour transmettre les flux de données dont la popularité est inférieure audit seuil par ledit lien terrestre.

9. Système de communications satellitaires selon l'une des revendications précédentes, dans lequel le message (226) indiquant une correspondance entre ledit flux de données et des paramètres de diffusion point à multipoint comprend une adresse IP multicast.

10. Système de communications satellitaires selon l'une des revendications précédentes, dans lequel ledit routeur terminal (104) est configuré pour, lorsqu'il reçoit une pluralité de requêtes d'un même flux de données depuis les terminaux utilisateurs, transmettre une unique requête dudit flux de données au serveur.

11. Système de communications satellitaires selon l'une des revendications précédentes, dans lequel ledit routeur satellite (103) est configuré pour transmettre les flux de données les plus populaires lorsque la charge d'utilisation du réseau satellitaire est inférieure à un seuil.

12. Procédé de transmission d'un flux de données dans un système de communications satellitaires comprenant un serveur (102), une pluralité de terminaux utilisateurs (101), au moins une passerelle satellite (111) connectée audit serveur par le biais d'un routeur satellite (103), et configurée pour communiquer avec au moins un terminal satellite (113) par un lien satellitaire, chaque terminal utilisateur étant connecté à un dit terminal satellite par le biais d'un routeur terminal (104) comprenant des ressources de stockage mémoire, et étant configuré pour effectuer des requêtes de flux de données auprès dudit serveur, tel qu'il comprend les étapes de :
• Recherche (212, 222), par le routeur terminal (104) lors de l'envoi (211, 221) d'une requête d'un flux de données par ledit terminal utilisateur, dudit flux de données dans les ressources de stockage mémoire et :
∘ lorsque ledit flux de données n'est pas disponible : mémorisation de ladite requête et, lorsqu'un message (226) de correspondance entre ledit flux de données et des paramètres de diffusion point à multipoint a été reçu, blocage de la transmission de la requête sur le lien satellitaire, et sinon transmission de ladite requête audit routeur satellite, et mise en œuvre des étapes suivantes du procédé, ou
∘ lorsque ledit flux de données est disponible, transmission dudit flux de données au terminal utilisateur, et blocage de la transmission de ladite requête d'un flux de données au serveur,
• Transmission, par ledit routeur satellite vers ledit serveur, de ladite requête d'un flux de données,
• Transmission, par ledit serveur vers ledit routeur satellite, desdites données sous la forme d'un flux de données point à point,
• Estimation (213, 223), par ledit routeur satellite, de la popularité dudit flux de données requis,
• Lorsque ladite estimation de popularité est supérieure ou égale audit seuil :
∘ Transmission à l'ensemble des routeurs terminaux d'un message (226) indiquant une correspondance entre ledit flux de données et des paramètres de diffusion point à multipoint,
∘ Conversion (224), par ledit terminal satellite, dudit flux de données point à point en un flux de données point à multipoint dont les paramètres de diffusion sont ceux dudit message (226) de correspondance,
∘ Transmission (224), par ledit terminal satellite, dudit flux de données point à multipoint associé à ladite estimation de popularité audit routeur terminal,
∘ Réception, par ledit routeur terminal, des flux point à multipoint transmis par le routeur satellite, conversion (225) desdits flux en flux de données point à point transmis (225) aux terminaux utilisateurs les ayant requis en utilisant ledit message de correspondance transmis par le routeur satellite, et
∘ Mise en mémoire (225), par ledit routeur terminal, dudit flux de données, selon l'estimation de popularité.

13. Procédé de transmission d'un flux de données selon la revendication précédente, comprenant en outre, lorsque l'estimation de popularité réalisée par le routeur satellite est inférieur à un seuil, les étapes de :
• Transmission (214), par ledit routeur satellite, dudit flux de données point à point au routeur terminal, et
• Transmission (215), par ledit routeur terminal, du flux de données point à point audit terminal utilisateur ayant initié la requête du flux de données.

14. Procédé de transmission d'un flux de données selon l'une des revendications 12 à 13, comprenant en outre une étape de transmission (234), par ledit routeur terminal et à destination dudit routeur satellite, d'une mesure de la consommation des flux de données mémorisés par le routeur terminal, et une étape (233) de mise à jour ladite estimation de popularité réalisée par ledit routeur satellite prenant en compte ladite mesure de la consommation des flux de données.

## Patentansprüche

1. Satellitenkommunikationssystem zum Übertragen eines Datenflusses, das Satellitenkommunikationssystem umfassend einen Server (102), mehrere Benutzer-Terminals (101), wenigstens ein Satelliten-Gateway (111), das mit dem Server über einen Satelliten-Router (103) verbunden und zum Kommunizieren mit wenigstens einem Satelliten-Terminal (113) über eine Satellitenverbindung konfiguriert ist, wobei jedes Benutzer-Terminal mit dem Satelliten-Terminal durch einen Terminal-Router (104) verbunden ist, der Speicherressourcen umfasst und zum Bewirken von Datenflussanforderungen beim Server konfiguriert ist, wobei das Satellitenkommunikationssystem derart ist, dass:
• der Terminal-Router (104), wenn er eine Anforderung für einen Datenfluss von einem Beutzer-Terminal empfängt, zum Suchen (212, 222, 232) konfiguriert ist, ob der Datenfluss in den Speicherressourcen zur Verfügung steht, und:
∘ wenn der Datenfluss nicht zur Verfügung steht: Speichern der Anforderung und, wenn eine Korrespondenznachricht (226) zwischen dem Datenfluss und Punkt-zu-Mehrpunkt-Verteilungsparametern empfangen wurde, Sperren der Übertragung der Anforderung auf der Satellitenverbindung, andernfalls Senden derselben zum Satelliten-Router,
∘ wenn der Datenfluss zur Verfügung steht, Senden desselben zum Benutzer-Terminal und Sperren der Übertragung der Anforderung;
• der Satelliten-Router (103), wenn er eine Datenflussanforderung empfängt, konfiguriert ist zum:
∘ Senden der Anforderung zum Server und Empfangen des Datenflusses,
∘ Schätzen einer Popularität (213, 223) des Datenflusses in Abhängigkeit von vorgenommenen Anforderungen, und, wenn die Popularität gleich oder höher ist als ein Schwellenwert:
▪ Senden einer Nachricht (226) zu allen Terminal-Routern, die eine Korrespondenz zwischen dem Datenfluss und den Punkt-zu-Mehrpunkt-Verteilungsparametern anzeigt, und
▪ Umwandeln des Datenflusses in einen Punkt-zu-Mehrpunkt-Datenfluss, dessen Verteilungsparameter die der Korrespondenznachricht sind und der Popularitätsschätzungen des Datenflusses umfasst, dann Senden desselben zum Terminal-Router;
• wobei der Terminal-Router (104) ferner konfiguriert ist zum:
∘ Empfangen von Punkt-zu-Mehrpunkt-Datenflüssen;
∘ Umwandeln der empfangenen Punkt-zu-Mehrpunkt-Datenflüsse in Punkt-zu-Punkt-Datenflüsse, die zu den Benutzer-Terminals, die sie angefordert haben, unter Verwendung der vom Satelliten-Router gesendeten Korrespondenznachrichten gesendet werden, und
∘ Speichern des Datenflusses gemäß seiner Popularität.

2. Satellitenkommunikationssystem nach dem vorherigen Anspruch, bei dem der Terminal-Router (104) ferner zum Führen einer Korrespondenzdatenbank zwischen den Datenflüssen, Punkt-zu-Mehrpunkt-Datenflussverteilungsparametern und Datenflussanforderungen konfiguriert ist.

3. Satellitenkommunikationssystem nach einem der vorherigen Ansprüche, bei dem der Terminal-Router (104) ferner zum Senden (234) eines Messwerts für einen Verbrauch von in den Speicherressourcen zur Verfügung stehenden Datenflüssen zum Satelliten-Router (103) konfiguriert ist.

4. Satellitenkommunikationssystem nach einem der vorherigen Ansprüche, bei dem der Terminal-Router (104) zum Einrichten eines Verbrauchsprofils der Datenflüsse, das von jedem der Benutzer-Terminals angefordert wird, mit dem er verbunden ist, und zum Speichern des empfangenen Punkt-zu-Mehrpunkt-Datenflusses gemäß seiner Popularität und seinem Verbrauchsprofil konfiguriert ist.

5. Satellitenkommunikationssystem nach einem der vorherigen Ansprüche, bei dem der Satelliten-Router (103) ferner zum Auswählen der in Punkt-zu-Mehrpunkt-Datenflüsse umzuwandelnden Datenflüsse in Abhängigkeit von ihrem Inhalt konfiguriert ist.

6. Satellitenkommunikationssystem nach einem der vorherigen Ansprüche, bei dem der Terminal-Router (104) zum Speichern der empfangenen Datenflüsse in Abhängigkeit von ihrer Popularität, der Popularität der Flüsse im Speicher und des zur Verfügung stehenden Speicherplatzes konfiguriert ist.

7. Satellitenkommunikationssystem nach einem der vorherigen Ansprüche, bei dem der Satelliten-Router (103) zum Speichern des Datenflusses gemäß seiner Popularität konfiguriert ist.

8. Satellitenkommunikationssystem nach einem der vorherigen Ansprüche, das ferner eine terrestrische Verbindung (320) zwischen dem Satelliten-Gateway und dem Satelliten-Terminal umfasst, wobei der Satelliten-Router (103) zum Senden der Datenflüsse, deren Popularität geringer ist als die Schwelle, durch die terrestrische Verbindung konfiguriert ist.

9. Satellitenkommunikationssystem nach einem der vorherigen Ansprüche, bei dem die Nachricht (226), die eine Korrespondenz zwischen dem Datenfluss und Punkt-zu-Mehrpunkt-Verteilungsparametern anzeigt, eine Multicast-IP-Adresse umfasst.

10. Satellitenkommunikationssystem nach einem der vorherigen Ansprüche, bei dem der Terminal-Router (104) so konfiguriert ist, dass er, wenn er mehrere Anforderungen für einen selben Datenfluss von den Benutzer-Terminals empfängt, nur eine einzige Anforderung des Datenflusses zum Server sendet.

11. Satellitenkommunikationssystem nach einem der vorherigen Ansprüche, wobei der Satelliten-Router (103) zum Senden der populärsten Datenflüsse konfiguriert ist, wenn die Auslastung des Satellitennetzes kleiner ist als eine Schwelle.

12. Verfahren zum Senden eines Datenflusses in einem Satellitenkommunikationssystem, umfassend einen Server (102), mehrere Benutzer-Terminals (101), wenigstens ein Satelliten-Gateway (111), das über einen Satelliten-Router (103) mit dem Server verbunden und zum Kommunizieren mit dem wenigstens einen Satelliten-Terminal (113) über eine Satellitenverbindung konfiguriert ist, wobei jedes Benutzer-Terminal mit dem Satelliten-Terminal über einen Terminal-Router (104) verbunden ist, der Speicher-Ressourcen umfasst und zum Durchführen der Datenflussanforderungen beim Server konfiguriert ist, das die folgenden Schritte beinhaltet:
• Suchen (212, 222), durch den Terminal-Router (104), beim Senden (211, 221) einer Datenflussanforderung durch das Benutzer-Terminal, des Datenflusses in den Speicher-Ressourcen, und:
∘ Speichern, wenn der Datenfluss nicht zur Verfügung steht, der Anforderung, und Sperren, wenn eine Korrespondenznachricht (226) zwischen dem Datenfluss und Punkt-zu-Mehrpunkt-Verteilungsparametern empfangen wurde, des Sendens der Anforderung auf der Satellitenverbindung, und andernfalls Senden der Anforderung zum Satelliten-Router und Durchführen der folgenden Schritte des Verfahrens, oder
∘ Senden, wenn der Datenfluss zur Verfügung steht, des Datenflusses zum Benutzer-Terminal, und Sperren des Sendens der Anforderung eines Datenflusses zum Server,
• Senden, durch den Satelliten-Router zum Server, der Datenflussanforderung,
• Senden, durch den Server zum Satelliten-Router, der Daten in Form eines Punkt-zu-Punkt-Datenflusses,
• Schätzen (213, 223), durch den Satelliten-Router, der Popularität des angeforderten Datenflusses,
• wenn die Popularitätsschätzung gleich oder höher als die Schwelle ist:
∘ Senden einer Nachricht (226), die eine Korrespondenz zwischen dem Datenfluss und den Punkt-zu-Mehrpunkt-Verteilungsparametern anzeigt, zu allen Terminal-Routern,
∘ Umwandeln (224), durch das Satelliten-Terminal, des Punkt-zu-Punkt-Datenflusses in einen Punkt-zu-Mehrpunkt-Datenfluss, dessen Verteilungsparameter die der Korrespondenznachricht (226) sind,
∘ Senden (224), durch das Satelliten-Terminal, des mit der Popularitätsschätzung assoziierten Punkt-zu-Mehrpunkt-Datenflusses zum Terminal-Router,
∘ Empfangen, durch den Terminal-Router, von vom Satelliten-Router gesendeten Punkt-zu-Mehrpunkt-Flüssen, Umwandeln (225) der Flüsse in Punkt-zu-Punkt-Datenflüsse, die zu den Benutzer-Terminals gesendet (225) wurden, die sie angefordert haben, anhand der vom Satelliten-Router gesendeten Korrespondenznachricht, und
∘ Speichern (225), durch den Terminal-Router, des Datenflusses gemäß der Popularitätsschätzung .

13. Verfahren zum Senden eines Datenflusses nach dem vorherigen Anspruch, das ferner, wenn die vom Satelliten-Router durchgeführte Popularitätsschätzung geringer ist als eine Schwelle, die folgenden Schritte beinhaltet:
• Senden (214), durch den Satelliten-Router, des Punkt-zu-Punkt-Datenflusses zum Terminal-Router, und
• Senden (215), durch den Terminal-Router, des Punkt-zu-Punkt-Datenflusses zum Benutzer-Terminal, das die Anforderung des Datenflusses eingeleitet hat.

14. Verfahren zum Senden eines Datenflusses nach einem der Ansprüche 12 bis 13, das ferner einen Schritt des Sendens (234), durch den Terminal-Router zum Satelliten-Router, eines Messwertes für den Verbrauch der vom Terminal-Router gespeicherten Datenflüsse und einen Schritt (233) des Aktualisierens der vom Satelliten-Router durchgeführten Popularitätsschätzung unter Berücksichtigung des Messwertes des Verbrauchs der Datenflüsse beinhaltet.

## Claims

1. Satellite communications system for transmitting a data stream, the satellite communications system comprising a server (102), a plurality of user terminals (101), at least one satellite gateway (111) connected to said server through a satellite router (103), and configured to communicate with at least one satellite terminal (113) via a satellite link, each user terminal being connected to said satellite terminal through a terminal router (104) comprising memory storage resources, and being configured to make data stream requests to said server, the satellite communications system being such that:
• the terminal router (104) is configured to, when it receives a request for a data stream transmitted by a user terminal, search (212, 222, 232) to see if said data stream is available in its memory resources, and:
∘ when said data stream is not available: store said request and, when a message (226) of correspondence between said data stream and point-to-multipoint broadcasting parameters has been received, block the transmission of said request on the satellite link, otherwise transmit it to said satellite router,
∘ when said data stream is available, transmit it to the user terminal, and block the transmission of said request;
• the satellite router (103) is configured to, when it receives a request for a data stream:
∘ transmit the request to the server and receive said data stream,
∘ estimate a popularity (213, 223) of said data stream as a function of the requests made and, when said popularity is above or equal to a threshold:
▪ transmit to all the terminal routers a message (226) indicating a correspondence between said data stream and point-to-multipoint broadcasting parameters, and
▪ convert said data stream into a point-to-multipoint data stream whose broadcasting parameters are those of said correspondence message, and comprising said estimation of popularity of said data stream, then transmit it to the terminal router;
• the terminal router (104) is further configured to:
∘ receive point-to-multipoint data streams,
∘ convert the point-to-multipoint data streams received into point-to-point data streams transmitted to the user terminals having requested them, by using said correspondence messages transmitted by the satellite router, and
∘ according to its popularity, store said data stream.

2. Satellite communications system according to the preceding claim, wherein the terminal router (104) is further configured to maintain a database of correspondence between data streams, point-to-multipoint data stream broadcasting parameters, and data stream requests.

3. Satellite communications system according to one of the preceding claims, wherein said terminal router (104) is further configured to transmit (234) to said satellite router (103) a measurement of a consumption of the data streams available in its memory resources.

4. Satellite communications system according to one of the preceding claims, wherein said terminal router (104) is configured to establish a profile of consumption of the data streams requested by each of the user terminals to which it is connected, and store said point-to-multipoint data stream received according to its popularity and said consumption profile.

5. Satellite communications system according to one of the preceding claims, wherein said satellite router (103) is further configured to select said data streams to be converted into point-to-multipoint data streams as a function of their content.

6. Satellite communications system according to one of the preceding claims, wherein said terminal router (104) is configured to store the data streams received as a function of their popularity, of the popularity of the streams in memory, and of the memory space available.

7. Satellite communications system according to one of the preceding claims, wherein said satellite router (103) is configured to store said data stream according to its popularity.

8. Satellite communications system according to one of the preceding claims, further comprising a terrestrial link (320) between said satellite gateway and said satellite terminal, in which said satellite router (103) is configured to transmit the data streams whose popularity is below said threshold via said terrestrial link.

9. Satellite communications system according to one of the preceding claims, wherein the message (226) indicating a correspondence between said data stream and point-to-multipoint broadcasting parameters comprises a multicast IP address.

10. Satellite communications system according to one of the preceding claims, wherein said terminal router (104) is configured to, when it receives a plurality of requests for a same data stream from the user terminals, transmit a single request for said data stream to the server.

11. Satellite communications system according to one of the preceding claims, wherein said satellite router (103) is configured to transmit the most popular data streams when the usage load of the satellite network is below a threshold.

12. Method for transmitting a data stream in a satellite communications system comprising a server (102), a plurality of user terminals (101), at least one satellite gateway (111) connected to said server through a satellite router (103), and configured to communicate with at least one satellite terminal (113) via a satellite link, each user terminal being connected to said satellite terminal through a terminal router (104) comprising memory storage resources, and being configured to make requests for data streams to said server, such that it comprises the steps of:
• searching (212, 222), by the terminal router (104) upon the sending (211, 221) of a request for a data stream by said user terminal, for said data stream in the memory storage resources, and:
∘ when said data stream is not available: storage of said request and, when a message (226) of correspondence between said data stream and point-to-multipoint broadcasting parameters has been received, blocking of the transmission of the request on the satellite link, and otherwise transmission of said request to said satellite router, and implementation of the subsequent steps of the method, or
∘ when said data stream is available, transmission of said data stream to the user terminal, and blocking of the transmission of said request for a data stream to the server,
• transmission, by said satellite router to said server, of said request for a data stream,
• transmission, by said server to said satellite router, of said data in the form of a point-to-point data stream,
• estimation (213, 223), by said satellite router, of the popularity of said requested data stream,
• when said estimation of popularity is above or equal to said threshold:
∘ transmission to all of the terminal routers of a message (226) indicating a correspondence between said data stream and point-to-multipoint broadcasting parameters,
∘ conversion (224), by said satellite terminal, of said point-to-point data stream into a point-to-multipoint data stream whose broadcasting parameters are those of said correspondence message (226),
∘ transmission (224), by said satellite terminal, of said point-to-multipoint data stream associated with said estimation of popularity to said terminal router,
∘ reception, by said terminal router, of the point-to-multipoint streams transmitted by the satellite router, conversion (225) of said streams into point-to-point data streams transmitted (225) to the user terminals having requested them by using said correspondence message transmitted by the satellite router, and
∘ storage (225), by said terminal router, of said data stream, according to the estimation of popularity.

13. Method for transmitting a data stream according to the preceding claim, further comprising, when the estimation of popularity made by the satellite router is below a threshold, the steps of:
• transmission (214), by said satellite router, of said point-to-point data stream to the terminal router, and
• transmission (215), by said terminal router, of the point-to-point data stream to said user terminal having initiated the request for the data stream.

14. Method for transmitting a data stream according to one of Claims 12 to 13, further comprising a step of transmission (234), by said terminal router and to said satellite router, of a measurement of the consumption of the data streams stored by the terminal router, and a step (233) of updating said estimation of popularity made by said satellite router taking into account said measurement of the consumption of the data streams.
